# EUROPEAN PATENT APPLICATION

(11) **EP 3 520 998 A1**
(43) Date of publication of application: **07.08.2019**
(21) Application number: 18184597.5
(22) Date of filing: 20.07.2018
(51) Int. Cl.: B29C 64/124, B29C 64/321, B29C 64/259

(54) **THREE-DIMENSIONAL PRINTER**

(30) Priority: 01.02.2018 CN 201810101563
(71) Applicant: XYZprinting, Inc., New Taipei City 22201 (TW); Kinpo Electronics, Inc., New Taipei City 22201 (TW)
(72) Inventor: Lee, An-Hsiu, 22201 New Taipei City (TW); Huang, Chen-Fu, 22201 New Taipei City (TW); Chen, Chun-Jui, 22201 New Taipei City (TW); Lin, Tsai-Yi, 22201 New Taipei City (TW)
(74) Representative: 2K Patentanwälte Blasberg Kewitz & Reichel

(57) **Abstract**

A three-dimensional printer (100), comprising:
a machine platform (110);
a container (130), disposed on the machine platform (110); and
an injection module (170), disposed on the machine platform (110), and configured to inject a liquid forming material into the container (130), wherein the injection module (170) comprises:
a bottle body (171), containing the liquid forming material;
a deformable opening member (172), connected to the bottle body (171);
a driving assembly (173, 176), disposed beside the deformable opening member (172) to deform the deformable opening member (172); and
a flow guide member (174), connected between the deformable opening member (172) and the container (130), wherein the driving assembly (173, 176) drives the deformable opening member (172) to an open state, and the liquid forming material in the bottle body (171) flows to the flow guide member (174) through the deformable opening member (172), and flows to the container (130) through the flow guide member (174), wherein the driving assembly (173, 176) drives the deformable opening member (172) to a close state, and the liquid forming material in the bottle body (171) stops flowing to the flow guide member (174) from the deformable opening member (172).

## Description

### BACKGROUND

### Technical Field

The disclosure relates to a three-dimensional printer.

### Description of Related Art

In recent years, three-dimensional (3D) printers have been widely applied to various domains, and various 3D printing techniques have been appeared in succession, and make an era that everything can be printed. Photopolymer is a liquid forming material that is used by most of the 3D printers, and techniques such as StereoLithography Apparatus (SLA), Digital Light Processing (DLP), Continuous Liquid Interface Production (CLIP), etc., all take the liquid forming material, for example, the photopolymer as a printing material.

Taking a pull-up stereo lithography technique as an example, after a platform is moved into a container from top to bottom to contact the liquid forming material, a curing light source under the container provides a light to penetrate through the container to cure the liquid forming material located between the platform and the container into a forming layer, and then the forming layer is peeled off from the bottom of the container, such that the forming layer is attached to the platform, thereafter, the forming layers are stacked on the platform layer-by-layer to construct a 3D object.

An existing method of injecting the photopolymer into the container is generally a pressure pushing method, and the liquid forming material is driven through gas injection to flow into the container through a flow guide pipe. However, not only such method makes noise during the printing process, but also the flow guide pipe is easily squeezed so that a flow path thereof is not smooth, and is easily blocked due to deterioration of the photopolymer.

### SUMMARY

The disclosure is directed to a three-dimensional printer, which is capable of improving efficiency of injecting a liquid forming material into a container.

An embodiment of the disclosure provides a three-dimensional (3D) printer including a machine platform, a container and an injection module. The container and the injection module are respectively disposed on the machine platform, and the injection module is used for injecting a liquid forming material into the container. The injection module includes a bottle body, a deformable opening member, a driving assembly and a flow guide member. The bottle body contains the liquid forming material. The deformable opening member is connected to the bottle body. The driving assembly is disposed beside the deformable opening member to deform the deformable opening member. The flow guide member is connected between the deformable opening member and the container. The driving assembly drives the deformable opening member to an open state, and the liquid forming material in the bottle body flows to the flow guide member through the deformable opening member, and flows to the container through the flow guide member. The driving assembly drives the deformable opening member to a close state, and the liquid forming material in the bottle body stops flowing to the flow guide member from the deformable opening member.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a simple schematic diagram of a three-dimensional printer according to an embodiment of the disclosure.
FIG. 2 is a schematic diagram of electrical connections of a part of components of FIG. 1.
FIG. 3 is a schematic diagram of an injection module.
FIG. 4 is a schematic diagram of an injection module according to another embodiment of the disclosure.

### DESCRIPTION OF EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

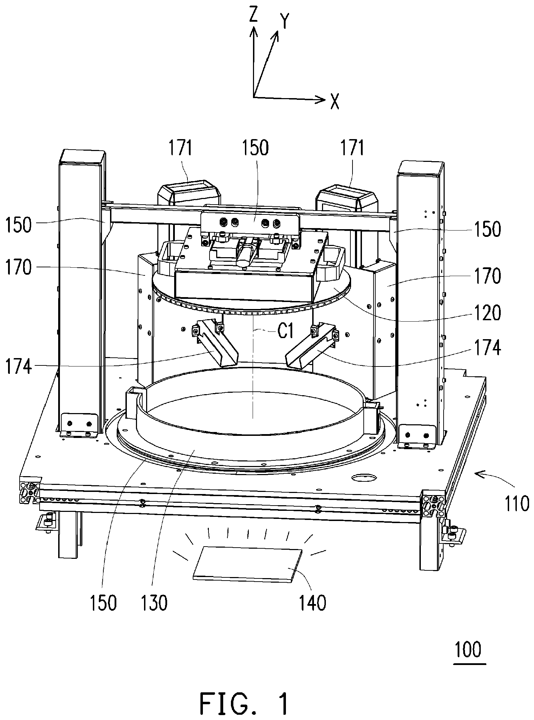

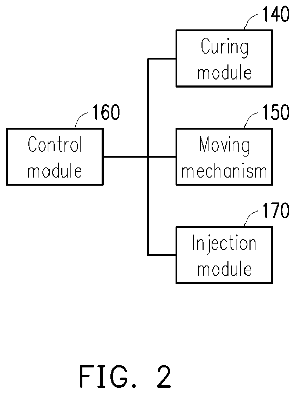

FIG. 1 is a simple schematic diagram of a three-dimensional (3D) printer according to an embodiment of the disclosure. FIG. 2 is a schematic diagram of electrical connections of a part of components of FIG. 1. A Cartesian coordinates X-Y-Z are provided to facilitate component description. Referring to FIG. 1 and FIG. 2, in the present embodiment, the 3D printer 100 is, for example, a stereo lithography device, which includes a machine platform 110, a forming platform 120, a container 130, a curing module 140, a moving mechanism 150, a control module 160 and an injection module 170. As shown in FIG. 1, the moving mechanism 150 includes a gantry moving platform disposed on the machine platform 110, and the forming platform 120 is disposed on the gantry moving platform and is driven by the same, so as to implement movement on an X-Z plane. Moreover, the moving mechanism 150 further includes a rotation mechanism disposed on the machine platform 110, and the container 130 is disposed on the rotation mechanism, and is adapted to rotate relative to the forming platform 120 about a rotation axis C1 (the rotation axis C1 is parallel to the Z-axis). The moving mechanism 150 may be implemented by an existing moving mechanism, so that detail thereof is not repeated. The moving mechanism 150 is electrically connected to and controlled by the control module 160, so as to implement the aforementioned driving operation.

The container 130 is used for containing a liquid forming material (for example, photopolymer), and the curing module 140 is disposed under the machine platform 110 and is electrically connected to the control module 160, such that when the forming platform 120 is driven and dipped into the liquid forming material in the container 130, the control module 160 drives the curing module 140 to provide a curing light (for example, an ultraviolet light) to pass through the bottom of the container 130 to cure the liquid forming material, such that the liquid forming material is cured to form a forming layer, and in collaboration with a pulling motion between the forming platform 120 and the container 130 (i.e. the forming platform 120 is driven to move towards a positive Z-axis direction to depart from the bottom of the container 130), the forming layer is peeled off from the bottom of the container 130 to achieve an effect of forming the forming layer on the forming platform 120. In this way, as the forming layers are stacked on the forming platform 120 layer-by-layer according to the aforementioned procedure, a 3D object is printed. The method of forming the 3D object and the corresponding components of the 3D printer 100 may be learned from the technique of the StereoLithography Apparatus (SLA), so that detail thereof is not repeated.

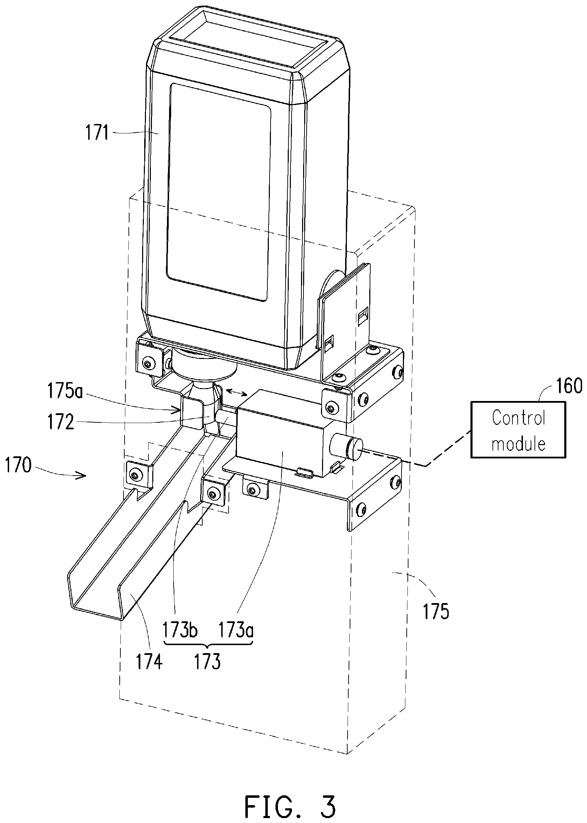

FIG. 3 is a schematic diagram of an injection module. Referring to FIG. 1 and FIG. 3, in the present embodiment, the injection module 170 a bottle body 171, a deformable opening member 172, a driving assembly 173, a flow guide member 174 and a stand 175. As shown in FIG. 1, the stand 175 is disposed on the machine platform 110, and the bottle body 171, the flow guide member 174 and the driving assembly 173 are respectively assembled to the stand 175. The bottle body 171 is used for containing the liquid forming material, the deformable opening member 172 is connected to an outlet of the bottle body 171, and the driving assembly 173 is disposed beside the deformable opening member 172 to deform the deformable opening member 172. The flow guide member 174 is connected between the deformable opening member 172 and the container 130.

It should be noted that the deformable opening member 172 is a rubber member having an incision at the bottom (the portion facing the flow guide member 174), and the driving assembly 173 may squeeze the deformable opening member 172 to open the incision, or the driving assembly 173 may move away from the deformable opening member 172 to close the incision. As shown in FIG. 3, when the driving assembly 173 drives the deformable opening member 172 to an open state, the liquid forming material in the bottle body 171 flows to the flow guide member 174 through the incision of the deformable opening member 172, and flows into the container 130 through the flow guide member 174. When the driving assembly 173 drives the deformable opening member 172 to a close state, the liquid forming material in the bottle body 171 stops flowing to the flow guide member 174 from the incision of the deformable opening member 172. Meanwhile, since a size of the incision is changed along with different deformation degrees of the rubber member (the deformable opening member 172), the deformable opening member 172 may correspondingly increase a flow rate and speed a flow velocity according to an actual requirement through an open design.

In the present embodiment, the driving assembly 173 includes a power source 173a and a moving member 173b, where the power source 173a is, for example, a solenoid, which is assembled to the stand 175 and is electrically connected to the control module 160, and the moving member 173b is connected to the power source 173a and driven by the same, such that the moving member 173b is adapted to be axially moved along a double arrow symbol shown in FIG. 3. The deformable opening member 172 is located on a moving path of the moving member 173b, and is adapted to be squeezed or not squeezed by the moving member 173b to switch between the open state and the close state. Further, as shown in FIG. 3, three sides of the deformable opening member 172 are covered and limited by baffle plates 175a of the stand 175, and only one side of the deformable opening member 172 is exposed to face the moving member 173b. In this way, when the power source 173a drives the moving member 173b to move towards the deformable opening member 172, the deformable opening member 172 may be squeezed to open the incision, and due to the gravity, the liquid forming material in the bottle body 171 may flow to the flow guide member 174 through the deformable opening member 172, so as to flow to the container 130 from the flow guide member 174. Comparatively, when the power source 173a drives the moving member 173b to move away from the deformable opening member 172, an elastic restoring force of the deformable opening member 172 drives the deformable opening member 172 to restore its original state, i.e. the incision at the bottom thereof is again closed. In this way, the liquid forming material stops flowing out from the bottle body 171 through the deformable opening member 172.

According to the above description, since each of the components of the injection module 170 is configured one-by-one according to a gravity direction, i.e. the bottle body 171, the deformable opening member 172, the flow guide member 174 and the container 130 are sequentially configured in the gravity direction, the liquid forming material flows all the way to the container 130 from the bottle body 171 along the gravity direction, and it is unnecessary to additionally add a related driving structure to drive the liquid forming material, and generation of noise is effectively decreased.

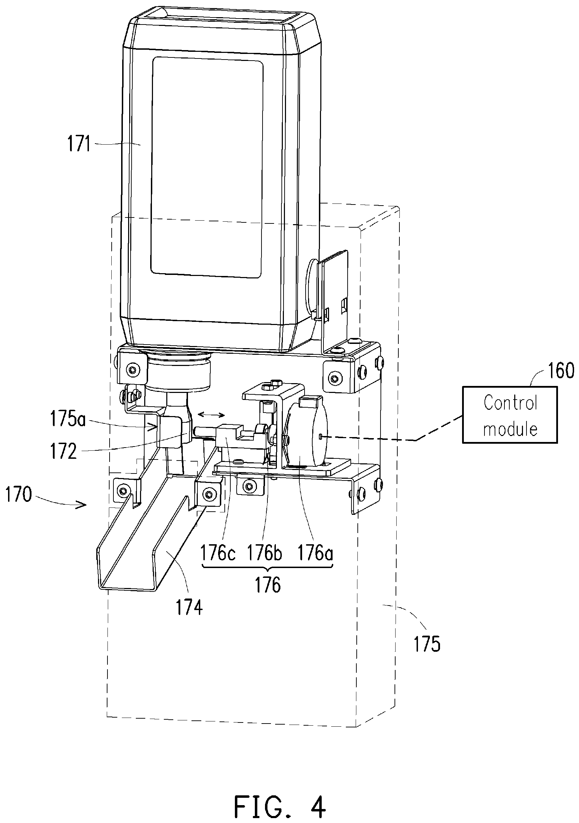

FIG. 4 a schematic diagram of an injection module according to another embodiment of the disclosure. Referring to FIG. 4, the injection module of FIG. 4 is similar to the injection module of the embodiment of FIG. 3, i.e. the liquid forming material is contained in the bottle body 171, and based on whether the deformable opening member 172 is driven and deformed, the liquid forming material may flow to the flow guide member 174 from the deformable opening member 172 or stop flowing to the flow guide member 174 from the deformable opening member 172. A difference there between is that a driving assembly 176 of the present embodiment includes a power source 176a, a moving member 176c and a rail 176b disposed on the stand 175, where the power source 176a is, for example a screw motor, and is electrically connected to the control module 160, and the moving member 176c is movably coupled to the rail 176b, and is adapted to move along the double arrow symbol shown in FIG. 4, and is adapted to be driven by a screw of the power source 176a to move back and forth. The deformable opening member 172 is located on a moving path of the moving member 176c, and is adapted to be squeezed or not squeezed by the moving member 176c to switch between the open state (the incision is opened) and the close state (the incision is closed), so as to achieve the same effect of enabling or disabling providing the liquid forming material as that of the aforementioned embodiment.

In summary, in the 3D printer of the disclosure, the components of the injection module are configured along the gravity direction, and the deformable opening member is configured between the bottle body and the flow guide member, and the incision is formed on the rubber member thereof, and by using the driving member to drive or not drive the rubber member to deform, the liquid forming material in the bottle body may smoothly flow to the flow guide member through the deformable opening member, or the liquid forming material in the bottle body stops flowing to the flow guide member through the deformable opening member. In this way, the liquid forming material flows due to gravity, so that it is unnecessary to additionally configure a driving structure, and a flowing process of the liquid forming material is smooth without noise. Moreover, by applying open components, for example, the deformable opening member and the flow guide member, a problem that the liquid forming material is liable to be hardened in a closed pipeline is avoided. Therefore, by using the driving assembly to squeeze or move away from the deformable opening member to cause the open/close state thereof, the liquid forming material may smoothly flow to the container according to a requirement, such that the 3D printing may be smoothly carried on.

## Claims

1. A three-dimensional printer (100), comprising:
a machine platform (110);
a container (130), disposed on the machine platform (110); and
an injection module (170), disposed on the machine platform (110), and configured to inject a liquid forming material into the container (130), wherein the injection module (170) comprises:
a bottle body (171), containing the liquid forming material;
a deformable opening member (172), connected to the bottle body (171);
a driving assembly (173, 176), disposed beside the deformable opening member (172) to deform the deformable opening member (172); and
a flow guide member (174), connected between the deformable opening member (172) and the container (130), wherein the driving assembly (173, 176) drives the deformable opening member (172) to an open state, and the liquid forming material in the bottle body (171) flows to the flow guide member (174) through the deformable opening member (172), and flows to the container (130) through the flow guide member (174), wherein the driving assembly (173, 176) drives the deformable opening member (172) to a close state, and the liquid forming material in the bottle body (171) stops flowing to the flow guide member (174) from the deformable opening member (172).

2. The three-dimensional printer (100) as claimed in claim 1, wherein the deformable opening member (172) is a rubber member having an incision, the driving assembly (173, 176) squeezes the deformable opening member (172) to open the incision, and the driving assembly (173, 176) moves away from the deformable opening member (172) to close the incision.

3. The three-dimensional printer (100) as claimed in claim 1, wherein the injection module (170) comprises a stand (175), the bottle body (171) is assembled to the stand (175), and the driving assembly (173) comprises:
a power source (173a), assembled to the stand (175); and
a moving member (173b), connected to and driven by the power source (173a), wherein the deformable opening member (172) is located on a moving path of the moving member (173b), and is switched between the open state and the close state based on whether the deformable opening member (172) is squeezed by the moving member (173b).

4. The three-dimensional printer (100) as claimed in claim 3, wherein the power source (173a) is a solenoid.

5. The three-dimensional printer as claimed in claim 1, wherein the injection module comprises a stand (150), the bottle body (171) is assembled to the stand (175), and the driving assembly (176) comprises:
a power source (176a), assembled to the stand (175); and
a moving member (176c), movably coupled to a rail (176b) of the stand (175), and connected to and driven by the power source (176a), wherein the deformable opening member (172) is located on a moving path of the moving member (176c), and is switched between the open state and the close state based on whether the deformable opening member (172) is squeezed by the moving member (176c).

6. The three-dimensional printer as claimed in claim 5, wherein the power source (176a) is a screw motor.

7. The three-dimensional printer as claimed in claim 1, wherein the bottle body (171), the deformable opening member (172), the flow guide member (174) and the container (130) are sequentially configured along a gravity direction.
